# EUROPEAN PATENT APPLICATION

(11) **EP 2 546 688 A1**
(43) Date of publication of application: **16.01.2013**
(21) Application number: 11173976.9
(22) Date of filing: 14.07.2011
(51) Int. Cl.: G02B 6/36, G02B 6/38, G02B 6/43, H04B 10/00

(54) **Right Angled Optical Interconnect System**

(71) Applicant: Tyco Electronics Nederland B.V., 5222 AR 's-Hertogenbosch (NL)
(72) Inventor: Elenbaas, Jacco, 4794RP Heijningen (NL)
(74) Representative: Grünecker, Kinkeldey, Stockmair & Schwanhäusser

(57) **Abstract**

An optical inter-connect system is provided for optically coupling an optical backplane (1) to an out-of-plane circuit board mounted on the optical backplane (1). An optical backplane connector (9) comprises a housing (10) having two apertures (11, 13) for fixing an end part of a waveguide and which are so positioned that a direction of the optical transmission axis through the first aperture (11) is deflected with respect the direction of the optical transmission axis through the second aperture (12) by a right angle. An optical interconnector (13) for optically coupling a second waveguide arranged on the circuit card to the optical backplane connector (9) is also provided, which includes a longitudinal cavity (15) for receiving the second waveguide and an optical interface for focusing the optical beam emanating from the second waveguide onto a receiving optical element at a frontal opening (44). This configuration allows a contactless optical coupling at right angles between the optical backplane (1) and the circuit board waveguides.

## Description

### TECHNICAL FIELD OF THE INVENTION

The present invention relates to optical interconnection devices for high speed electronic systems, and more specifically, to right angled optical connectors and inter-connector system for backplane system in optical PCB technology.

### BACKGROUND OF THE INVENTION

In recent years there has been a great interest in developing high speed transmission backplane interconnects for telecommunication and data processing systems which has been driven by an increasing demand for more intensive data routing through backplanes.

Since the required higher transmission rates are pushing copper backplane technology towards its limits, optical backplane technology has been presented as a good candidate for replacing the conventional backplanes with copper traces. Optical PCBs (Printed Circuit Board) incorporating multimode polymer waveguides are currently available. Current techniques allow forming waveguides either on the surface layer of a PCB or embedded within internal layers of a standard PCB substrate such as FR-4.

Optical waveguides have several advantages over copper traces for the transmission of signals, especially in telecommunications since they allow transmitting signals over a long distance with little loss of signal intensity. They are also employed in household appliances to provide a short link between a transmitter side and a receiver side, such as a DVD player and a stereo receiver.

The main issue regarding the use of optical backplanes concerns the optical coupling of the daughter cards and circuit boards to the optical backplane. Since the daughter cards are frequently removed from and frequently inserted to the backplane, optical connectors that ensure a good alignment and which can be easily plugged and unplugged are required.

Another issue concerns the typical backplane configuration itself, in which the daughter cards are plugged into the mother board or backplane board in an out-of-plane orientation, usually at a right angle, which implies deflecting the signal transmitting path along the daughter card or along the backplane by approximately 90°.

This implies intermediary optical interfaces on the backplane, such as deflection mirrors for deflecting the light propagation by 45°. However, this demands a more complex alignment and assembly of the parts.

Other methods have been developed in which light from an external photonic device is directly coupled with a backplane waveguide.

An optical coupling system has been proposed in which two daughter cards are orthogonally assembled to a passive optical PCB. Each daughter card has an emitting and/or receiving device, such as a VCSEL device, that is directly coupled to a respective end face of the optical waveguide in the backplane and forming a so-called butt-coupling configuration.

Although this technique eliminates the need for intermediary optical interfaces on the backplane, it requires a high degree of alignment between the VCSEL device of the daughter card and the backplane waveguides. This aspect is particularly important in the case of backplanes incorporating a high density of parallel waveguides.

Further, this technique does not allow maintaining a high alignment tolerance due to the frequent attachment/detachment of daughter cards, system vibrations, deformation of the circuit boards, etc.

An alternative coupling technique has been proposed in which the optical interface of the daughter card is provided on a separate coupling platform that is mechanically connected to the daughter card by a flexible bridge for bringing the optical interface into physical alignment with the waveguide interface of the optical PCB. However, although this technique does not require the level of high precision alignment required by the butt-configuration scheme, this coupling method is not very compact due to the space required by each coupling platform and respective flexible bridges. Therefore, it is not suitable for a backplane interconnection system with a high density of parallel waveguides.

Another problem associated with conventional optical connectors of a pluggable type, such as the platform connector described above, is that they must be kept clean in order to extend the life time of the optical connector and to minimise transmission loss and optical return at the coupling point. Backplane optical connectors are particularly difficult to clean and often inaccessible since they are generally located in the backplane chassis, which makes access to the optical connectors located on the rear side very difficult. The removal of the optical connectors for cleaning is also not practical since the connectors are small and difficult to handle. The end faces of the optical fibers may also be destroyed by the cleaning process.

Thus, it is desirable to provide an optical backplane interconnect technique that is relatively insensitive to pollution of the backplane due to dust, humidity, etc.

Consequently, there is an increasing demand from consumers for high speed optical backplane interconnection systems capable of associating high speed transmission rates to a high density of packaging, while being, at the same time, insensitive to contamination of the backplane by dust, dirt and other contaminants and which provide an easy alignment of the optical parts.

### SUMMARY OF THE INVENTION

The present invention aims at overcoming the disadvantages and shortcomings of the prior art discussed above and an object thereof is to provide an optical interconnecting system, an optical backplane connector and an optical interconnector for a daughter card that are capable of providing high speed transmission rates to a high density of packaging, while being, at the same time, insensitive to contamination of optical coupling region caused by the accumulation of dust, dirt and other contaminants at the backplane and easy to align.

According to the present invention, it is provided an optical backplane connector comprising a housing having a first and second apertures linked by an inner hollow path for accommodating an end portion of a waveguide, wherein the first aperture is positioned with respect to the second aperture so that the optical transmission axes through the first and second apertures, respectively, are aligned in different directions.

In this way, the end face of the backplane waveguide can be easily aligned with an optical element such as the end face of a daughter card waveguide without the need of using deflecting optical interfaces, such as 45° deflecting mirrors, which take considerable volume and effort in terms of precise alignment and montage. Thus, the present invention provides an optical backplane connector of a compact size, inexpensive and which can be easily adapted to different configurations of optical backplanes and interconnected daughter cards.

The present invention also provides an optical interconnector comprising a housing adapted to be mated to an optical backplane connector according to any one of the preceding claims and having a longitudinal cavity adapted to accommodate an end part of a second waveguide, wherein the longitudinal cavity has a frontal opening provided on a side of the housing facing the optical backplane connector and which is aligned with the first aperture of the backplane connector when mated.

Accordingly, a circuit board with the optical interconnector of the invention may be optically coupled and decoupled from an optical backplane at any out-of-plane orientation in an easy manner. Further, since the optical coupling may be made with waveguides arranged in parallel to the circuit board, the minimum space between parallel circuit boards is reduced to a minimum, and therefore a high density of circuit boards mounted to a same optical backplane can be achieved.

The present invention further provides an optical backplane interconnection system, comprising a backplane adapted to accommodate a waveguide for transmitting optical signals along a direction substantially parallel to the backplane, the optical backplane connector of the invention and which is mounted on the backplane and oriented so as to receive the waveguide through the second aperture and to fix an end face of the waveguide at the first aperture, and the optical interconnector according to the invention, wherein the optical interconnector is adapted to be mounted to a circuit board.

The present invention also provides a method of optically coupling an optical backplane to an out-of-plane circuit board, comprising providing a first waveguide substantially parallel to the optical backplane and deflecting the direction of an optical transmission axis of the first waveguide by bending an end part of the second waveguide, providing a second waveguide substantially parallel to the out-of-plane circuit board, focusing an optical beam emanating from the second waveguide onto an end face of the first waveguide and converging the optical beam to a pre-determined beam diameter at the end face.

This object is solved by the subject matter of the independent claims. Advantageous embodiments of the present invention are defined by the dependent claims.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
Fig. 1 shows a longitudinal cross-section through an optical interconnecting system according to an embodiment of the present invention;
Fig. 2 is a magnified view of the optical coupling region I shown in Fig. 1;
Fig. 3 shows a perspective view of a fully assembled optical backplane connector (top image) and an exploded view of the optical connector (bottom image) according to an embodiment of the present invention;
Fig. 4 is a perspective view of a first assembly part of the optical backplane connector shown in Fig. 3;
Fig. 5 is a perspective view of a second assembly part of the optical backplane connector shown in Fig. 3;
Fig. 6 is a perspective view of an optical interconnector according to an embodiment of the present invention viewed from a frontal side that engages to the optical backplane connector shown in Fig. 3;
Fig. 7 is a perspective view of the optical interconnector shown in Fig. 6 viewed from a rear side; and
Fig. 8 is a perspective view of the engaging configuration of the optical backplane connector shown in Fig. 3 with the optical interconnector shown in Fig. 6.

### DETAILED DESCRIPTION OF THE INVENTION

Advantageous embodiments of an optical interconnecting system, an optical connector and an optical interconnector constituted according to the present invention will now be described in further detail with reference to the accompanying drawings.

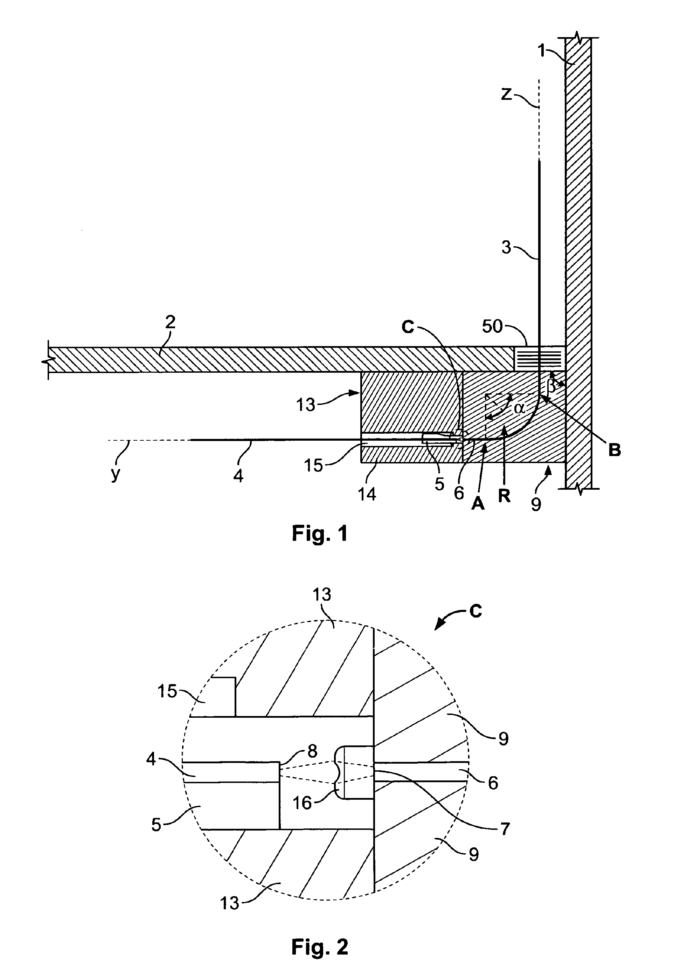

Fig. 1 is a longitudinal cross-section view through an optical interconnecting system according to an embodiment of the present invention.

Fig. 1 shows a part of a backplane, such as an optical backplane 1, and a part of a circuit board 2 mounted on the optical backplane 1 with a right angle orientation.

Although the present invention will be herein described with reference to a configuration in which the main surface of the circuit board is oriented substantially at a right angle with respect to a mounting surface of the optical backplane 1, the present invention may be conveniently applied to any out-of-plane configuration in which the planes of the circuit board and the optical backplane 1 intersect each other with an orientation angle β different from zero.

Further, as will be immediately recognized by those skilled in the art, the present invention may be conveniently applied for optically interconnecting a plurality of circuit boards mounted with out-of-plane orientations on the same optical backplane, for e.g. in parallel to each other, and separated by spacers or standoffs.

In the present invention the optical backplane 1 is a printed circuit board having various circuits such as processors and memories arranged on it, like a mother board. However, the optical board may be a passive circuit board with the unique function of providing communication of optical and/or electric signals between the circuit boards coupled to the optical backplane 1.

The out-of-plane circuit board may be a printed circuit board such as a daughter card 2 for providing an extension of the mother board, or a line card.

The daughter card 2 is fitted on top of and substantially orthogonal to the optical backplane 1 by standard means known in the art such as a rack provided at the edges of the optical backplane 1 (not shown).

In Fig. 1, the optical backplane 1 has one optical waveguide 3 arranged on it, such as an optical fiber, for transmitting optical signals between the daughter card 2 and a circuit device and/or another daughter card (not shown) mounted on the optical backplane 1. For simplicity, the optical waveguides arranged on the optical backplane 1 will be referred to as backplane waveguides.

A plurality of optical waveguides may be arranged side by side in the optical backplane 1 (not shown), for instance forming a sheet of optical waveguides, and which are attached so as to run in parallel to the optical backplane 1, at least over a substantial part of the optical transmission path along the optical backplane 1. This allows maximizing the density of waveguides per surface area and therefore, increasing the density of optical communication channels on the optical backplane 1. Nevertheless, some waveguides may be disposed differently, namely, defining curved paths on the backplane surface in order to meet specific design criteria and/or communication purposes of the optical backplane 1.

In Fig. 1, the daughter card 2 has one optical waveguide 4, such as an optical fiber, arranged on it for communicating optical signals from a transmitter or receiver device (not shown) arranged on the daughter card 2 with the optical backplane 1. However, a plurality of daughter card waveguides may be arranged side by side and in parallel on the daughter card 2 (not shown) for providing a higher density of optical transmission channels.

As shown in Fig. 1, the daughter card waveguide 4 is an optical fiber terminated by an optical ferrule 5, at least at one end, which can be easily coupled and decoupled from the daughter card 2 and the optical devices arranged on it (not shown). Alternatively or in addition, one or more daughter card waveguides 4 may be permanently fixed to the daughter card 2.

As illustrated in Fig. 1, the daughter card waveguide 4 is arranged in parallel to the daughter card 2 which allows a larger number of daughter cards to be mounted on the same optical backplane 1 in a compact manner.

This means that in order to optically couple the out-of-plane daughter card 2 to the optical backplane 1, the optical transmission path along the optical backplane 1 must be deflected and aligned with the optical transmission axis of the daughter card waveguide 4 running in parallel to the daughter card 2.

According to the present embodiment, this is achieved by bending an end portion 6 of the backplane waveguide 3 with respect to the optical backplane 1 by a bend angle *α* so as to orient an edge portion 6 of the backplane waveguide 3 in parallel with the plane of the daughter card 2, and thereby deflecting the optical transmission axis through an end face 7 of the backplane waveguide 3 with an end face 8 of the daughter card waveguide 4. Consequently, the direction of optical transmission (y-axis) through the end face 8 of the backplane waveguide 3 is deflected substantially by an angles, in the illustrated embodiment, a right angle, with respect to the direction of optical transmission (z-axis) along part of the backplane waveguide 3 on the optical backplane 1.

It is then not necessary to use deflecting optical interfaces, such as 45° deflecting mirrors, which take considerable volume and effort in terms of precise alignment and montage, optically coupling the end face 7 of the backplane waveguide 3 with the end face 8 of the daughter card waveguide 4.

The bend angle α necessary for aligning the backplane waveguide 3 corresponds essentially to the orientation angle β of the daughter card 2 with respect to the optical backplane 1. In the illustrated example, where the daughter card 2 is oriented at a right angle, the bend angle *α* is also substantially 90°.

As shown in Fig. 1, the end portion 6 of the backplane waveguide 3 is bent so as to form a curved region AB whose curvature is defined by the bend angle α and a radius of curvature, the bend radius R. The value of the bend radius R is limited by a minimum value that depends on the characteristics of the optical fiber and below which losses of optical radiation significantly increase due to the fiber bending.

Glass optical fibers may be used as optical waveguides for the optical backplane 1 and/or daughter card 2, which provide high transmissions rates and low attenuation at the wavelength range currently used for high speed communications, which is within 830 and 1300 nm.

The less expensive polymer optical fibers (POF), such as PMMA optical fibers, may be conveniently used for backplane waveguides 3 due to the facility of bending and lower bend loss of polymer fibers in comparison to glass fibers.

In the present embodiment, the backplane waveguide 3 is a graded-index polymer optical fiber (GI-POF), such as a perfluorinated polymer optical fiber. This type of optical fiber is capable of sustaining over a long term a bend radius of the order of a few millimetres much smaller than for glass fibers of the same core size. The smaller bend radius offered by Gl-POF is traduced into smaller and compacter optical backplane connectors. This makes it possible to increase the density of optical backplane connectors per surface area of the optical backplane and therefore, to achieve a high packaging density of optically connected daughter cards using the backplane connectors of the present invention.

GI-POF also combines ease of use of standard polymer fibers with the high data transmission rates and low attenuation properties typically attained by glass fibers within the operating wavelength range of 850-1300 nm.

Graded-Index optical fibers are also available with comparably larger core sizes than glass fibers, such as 120 µm, which facilitates the optical alignment of the fiber end face with the optical radiation. Further, the larger core size is less sensitive to the accumulation of dust particles at the coupling region which minimizes the undesirable effects of backplane contamination on the quality of the optical coupling.

In addition, the GI-POF can be terminated using simple and inexpensive tools, and the end face can be quickly polished or submitted to a hot melt process for providing a high-quality optical link.

As an alternative, the principles of the present invention can also be employed using prebent glass fibers having a laser shaped end face.

Referring to Fig. 1, the curved end portion 6 of the backplane waveguide 3 is housed in and fixed to an optical backplane connector 9 according to an embodiment of the present invention. The optical backplane connector 9, which will be referred to in the following as simply backplane connector, is designed so as to be mounted on the side of the optical backplane 1 where the backplane waveguide 3 is arranged. This is also the side facing the daughter card 2.

The backplane connector 9 comprises a housing 10 for accommodating the curved end portion 6 of the backplane waveguide 3 and maintaining the intended bend radius R, and consequently, the intended orientation of the waveguide edge portion with respect to the optical backplane 1.

The housing 10 is provided with an inner hollow path, such as a curved through-hole for enclosing and fixing the end portion (6). The dimensions of the through-hole are selected so as to adjust to the length, diameter size and intended bend radius (R) of the curved end portion 6.

The curved through-hole links two apertures 11, 12 located in external faces of the housing 10 and positioned with respect to one another so as to provide a deflection of the optical transmission axis along the optical backplane 1 by the desired bend angle *α*.

A first aperture 11 is provided on a first side of the housing 10 that will receive the backplane waveguide 3 arranged along the optical backplane 1. The distance between the first aperture 11 and the optical backplane 1 is selected based on design considerations, such as the distance between the optical backplane 1 and the backplane waveguide 3.

A second aperture 12 is provided on a second side of the housing 10 that will face the daughter card waveguide 4 when the daughter card 2 is mounted on the optical backplane 1. The second aperture 12 holds the end face 7 of the backplane waveguide 3 that will be coupled to the daughter card waveguide 4. The distance of the second aperture 12 with respect to the optical backplane 1 depends on the coupling position, the position of the first aperture 11 itself and the desired dimensions of the end portion 6 enclosed by the housing 10, namely, the bend radius R.

The first and second apertures 11, 12 are provided on adjacent sides of the housing 10 and which are respectively orthogonal to the optical backplane 1 and the daughter card 2. In this way, the direction of the optical transmission axis of the backplane waveguide 3 through the second aperture 12 is always deflected with respect to the optical transmission axis through the first aperture 11 by substantially the same angle as the orientation angle β between the optical backplane 1 and the daughter card 2.

In Fig. 1, the daughter card waveguide 4 is fixed to an optical interconnector 13 that is adapted to be mated to the backplane connector 9.

The optical interconnector 13 is preferably disposed on an edge portion 6 of the daughter card 2, namely, at a certain distance from the edge to be fitted to the optical backplane 1 for allowing the space for mating to the backplane connector 9.

The optical interconnector 13 comprises a housing 14 having a longitudinal cavity 15 adapted to receive an end portion of the daughter card waveguide 3 and to align the optical transmission axis of the daughter card waveguide 3 at the coupling region C.

When the optical interconnector 13 is arranged on the plane of the daughter card 2, the longitudinal axis of the cavity 15 is substantially parallel to the daughter card 2.

The cavity has a frontal opening 44 through which the optical beam transmitted by the waveguide is to be coupled with the end face 7 of the backplane waveguide 3. The cavity is positioned so that the frontal opening 44 is aligned with the coupling aperture of the backplane connector 9 when the two connectors 9, 13 are mated, thereby providing a rough optical alignment between the daughter card waveguide 4 and the backplane waveguide 3.

The longitudinal cavity 15 may also accommodate an optical interface means along the optical transmission axis of the daughter card waveguide 4 and between the end face 8 of the daughter card waveguide 4 and the frontal opening 44, and which provides a fine optical alignment and contactless optical coupling between the daughter card 2 and the backplane waveguide 3.

In the illustrated embodiment, the daughter card waveguide 4 and the optical interface means are provided in an optical fiber package. In this case, the cavity 15 is sized to receive the optical fiber ferrule 5 comprising the waveguide and the optical interface means.

The optical coupling between the daughter card 2 and backplane waveguide 3 will now be described with reference to Fig. 2, which is a magnified view showing a detail of the optical coupling region C shown in Fig. 1.

The optical interface means may comprise one or more lenses for focusing the diverging optical beam emanating from the end face 8 of the daughter card waveguide 4 onto the end face 7 of the receiving backplane waveguide 3.

The optical interface means may include optics such as an imaging lens 16 which has the advantage of providing a better immunity against contamination by particles of the optical coupling region C and offers greater tolerance to lateral misalignment between the coupled waveguides.

An optical fiber connector employing such optics is described in US patent application No. 12/842,768 filed on July 23, 2010. This connector has the advantage that it can be effectively mated to either a similar connector with the same optics or to a connector having no lens, for instance, by placing the receiving optical component of the second connector at the image point of the imaging optics of the first connector.

In the present embodiment, the optical interface means includes an imaging lens 16 that receives the diverging beam emanating from the daughter card waveguide 4 and images the beam to an image point I at a predetermined distance from the imaging lens 16.

Further, the imaging lens 16 is adapted to form the image point I behind the receiving end face 7 of the backplane waveguide 3, when the daughter card 2 and the optical backplane connectors 9 are mated. This means, that the image point I is formed at a distance from the imaging lens 16 greater than the distance from the imaging lens 16 to the frontal opening 44.

In particular, the distance at which the image point I is formed may be selected so that the converging beam intersects the receiving optical element, in this case the end face of the backplane waveguide 3, with a beam diameter of a desired value.

In particular, the beam diameter at the intersection may be selected depending on the core size of the backplane waveguide 3. This makes it possible to use a backplane waveguide 3 having a core size significantly greater than the core size of the transmitting waveguide.

For example, a GI-POF with a core size of 120 µm as the backplane waveguide 3 may be used in combination with a multimodal glass optical fiber with a core size of 50 µm as the daughter card waveguide 4. ,

As shown in Fig. 2, the light beam diverges from the end face 8 of the 50 µm glass fiber and is converged by the imaging lens 16 to produce an incident beam diameter that fits into the end face 7 of the 120 µm GI POF. Depending of the offset in the y-axis direction, it is possible to adjust the incident beam diameter into the best fit.

Hence, the imaging lens 16 not only allows focusing the optical radiation emitted by the daughter card waveguide 4 onto the backplane waveguide 3 but also produces a converging optical beam with a selected diameter at the coupling aperture of the backplane connector 9.

This provides an even better immunity against particle contamination and greater tolerance to lateral misalignment between the daughter card waveguide 4 and the backplane waveguide 3.

Alternatively, the optical interface means may comprise an expanded beam lens of a type known in the art, which expands the diverging optical beam emanating from the transmitting fiber and collimates it into a parallel optical beam. The expanded beam lens may be selected for producing a parallel optical beam with a pre-determined diameter suitable for fitting into the receiving area of the optical element at the mating, backplane connector 9. This form of coupling is also highly tolerant to significant lateral misalignment between the lenses, as well as to contamination by dust. However, since the collimated beam has approximately a constant diameter, it is not possible to adjust the incident beam diameter to fit the core of the backplane waveguide 3 by varying the distance between the lens and the receiving optical element in contrast to an imaging lens.

An additional lens may then be provided on the mating backplane connector 9, between the second aperture 12 and the end face 7 of the backplane waveguide 3, for focusing the collimated beam onto the end face of the receiving waveguide.

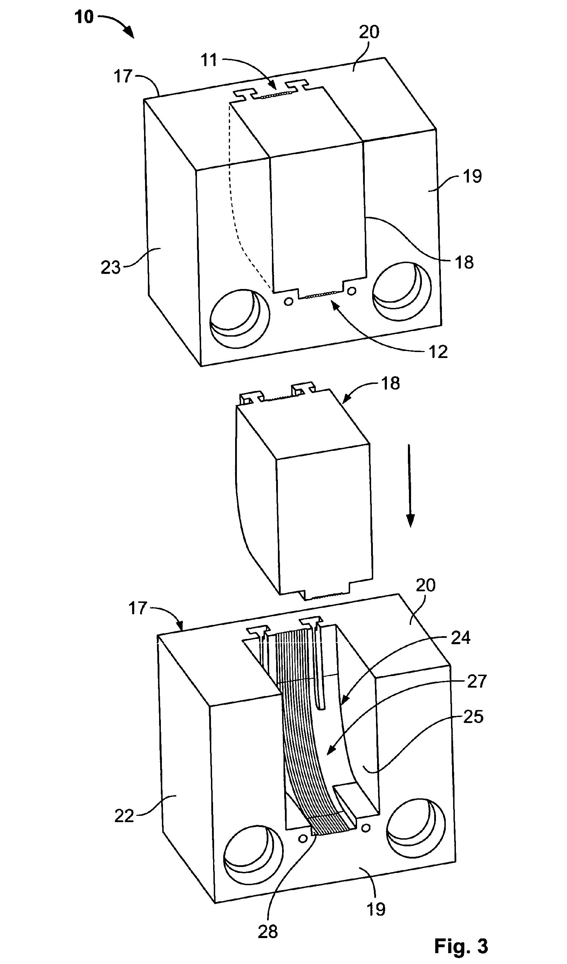

Fig. 3 shows a perspective view of a fully assembled optical backplane connector (top image) and an exploded view of the optical connector (bottom image) according to an embodiment of the present invention.

As shown in the top image of Fig. 3, the housing 10 of the backplane connector 9 is an assembly of the first and second assembly parts 17, 18 having a mating shape and being adapted to be clamped together so as to form the connector body.

The bottom image of Fig. 3 shows the backplane connector 9 in a fully assembled state. The first and the second assembly parts 17, 18 are formed so as to define the housing 10 with the form of a block. In the illustrated embodiment, the housing 10 has a cubic shape. However, a backplane connector 9 with other shapes may be envisaged. The two assembly parts 17, 18 also have the function of mechanically fixating the optical waveguides (not shown) between the two apertures 11, 12 of the housing as will be descried later.

The first assembly part 17, which is the main part, forms most of the body of the housing 10. Namely, part of a front side 19 and a top side 20 of the backplane connector 9 are defined by the front and top sides 19, 20 of the main assembly parts 17, 18, respectively. The bottom 21, rear 22 and adjacent walls 23 of the backplane connector 9 coincide with respective walls of the main part 17.

In addition, the main part 17 comprises a niche 24 or cavity for receiving and accommodating the second assembly part 18 into the mated position as shown in the bottom image of Fig. 3.

The niche 24 opens to the top side 20 and the front side 19 of the backplane connector 9 and has a form that substantially complements the form of the second assembly part 18.

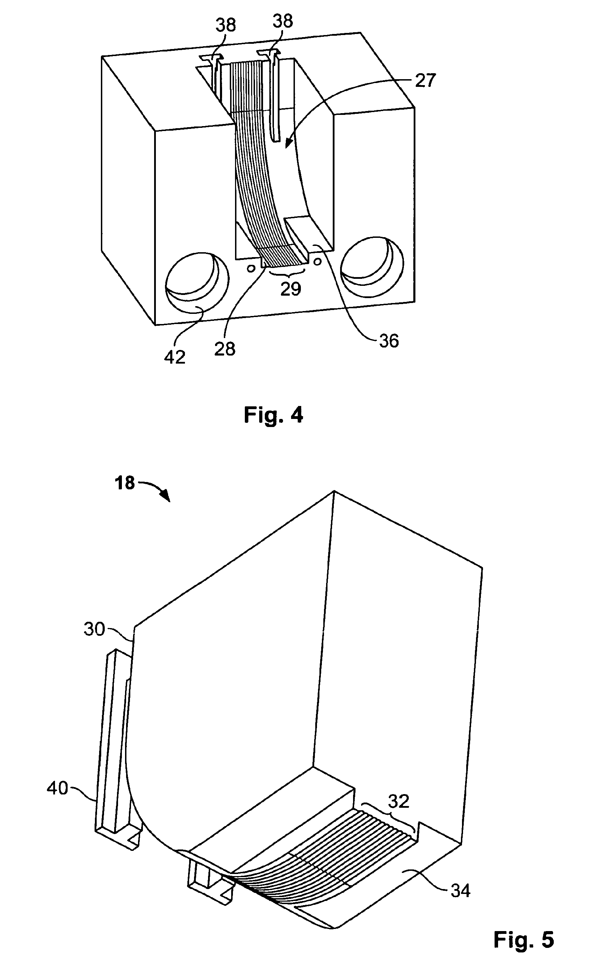

As shown in Fig. 4, the niche 24 is delimited by two lateral vertical walls 25, which are substantially parallel to the lateral walls 25 of the backplane connector 9, and which are joined by a semi-curved back wall 26 whose shape substantially follows the curvature intended for the backplane waveguide 3.

Accordingly, the back wall 26 is substantially vertical within a distance from the top side 19 of the backplane connector 9 for receiving the initially parallel backplane waveguide 3, and acquires a concave curvature in an intermediate region 27, with a radius of curvature that is substantially equal to the bend radius R intended for the waveguide. The back wall 26 becomes essentially horizontal on the bottom side 21 of the niche 24 for aligning the edge portion 6 of the waveguide at a right angle with respect to the part of the waveguide extending from the top side 20 of the backplane connector 9.

In addition, the back wall 26 may be provided with one or more grooves 29 for accommodating one or more waveguides, respectively, and which run along the back wall 26 from the top side 20 until the front side 19 of the connector, between the first and second apertures 11, 12.

When accommodated in the groove 29, the flexible optical waveguide acquires the curvature defined by the groove 29.

As shown in Fig. 4, a plurality of grooves 29 may be provided in the back wall 26, side by side and in parallel for accommodating a parallel array of waveguides.

Fig. 5 illustrates a second assembly part 18 designed so as to be mated with the main part 17.

As shown in Fig. 5, the second assembly part 18 is a mating part designed to fit into the niche 24. In particular, the mating part 18 includes a curved rear wall 30 with an intermediate, convex curvature that substantially matches the curved back wall 26 of the niche 24.

The rear wall 30 of the mating part 18 is provided with one or more grooves 32 that are positioned so as to coincide and complement the corresponding grooves 29 in the back wall 26 of the niche 24. Each pair of corresponding grooves 29, 32 is joined together when the backplane connector 9 is fully assembled, the corresponding grooves 29 in the niche 24 and in the mating part 18 defining the through-hole running between the first and second apertures 11, 12 of the housing 10. The cross section of the grooves 29, 32 is adapted to fit the diameter of the backplane waveguide 3.

In an alternative configuration, the grooves 29 may be provided only on either the back wall 26 of the niche 24 or in the rear wall 30 of the mating part 18 and adapted to enclose the cross-section of the optical fiber. The optical fiber will then be fixed in the grooves 32 by the smooth, opposed wall of mating part 18 or of the niche 24, respectively.

The mating part 18 may be provided with additional depressions 34 on the bottom side 21, at each side of the intermediate region 27 where the grooves 32 are located. These depressions 34 are complemented by corresponding elevations 36 provided at corresponding positions on the niche 24. These depressions 34 provide flat contact surfaces that increase the mechanical stability of the two assembly parts 17, 18 when mated. They also prevent the optical waveguides on the grooves 29 from being damaged due to the pressure applied when mating the two assembly parts 17, 18.

When the optical waveguides have been placed in the grooves 29 and the two assembly parts 17, 18 are assembled, the optical waveguides are fixed to the optical connector. It is then possible to cut the optical waveguides with the desired length and to perform the end face shaping of the waveguides, for instance, using a hot melt process which is an inexpensive end face preparation process that yields good results.

The main part 17 and the mating part 18 may further comprise guiding means for guiding the mating part along the niche 24 into the mated position.

As shown in Fig. 4, the main part 17 comprises at least one female guide 38 provided as a vertical recess 38 located in the back wall 26 of the niche 24 and aligned in parallel to the rear side 22.

The vertical recess 38 is opened towards the top side 20 of the backplane connector 9 for receiving a corresponding male guide 40 provided on the rear wall 30 of the mating part 18.

As shown in Fig. 5, the mating part 18 comprises at least one male guide 40 formed by a vertical protrusion 40 with the complementary shape of the female guide 38 and which is attached to the rear wall 30.

In the illustrated example, the female 38 and male guides 40 have corresponding T-shaped cross sections. This shape prevents the mating part 18 from moving towards the front side 19 of the backplane connector 9 when mated. However, the cross-section of the female and male guides may have another shape.

One or more fixing elements may be provided in the main part 17 for mating the backplane connector 9 to the optical interconnector 13 of the daughter card 2.

In the example of Fig. 4, the fixing elements are male recesses 42 with a circular shape that are provided on the bottom of the front side 19. However, fixing elements with other shapes and/or in other positions may be provided, for instance on the top of the front side 19.

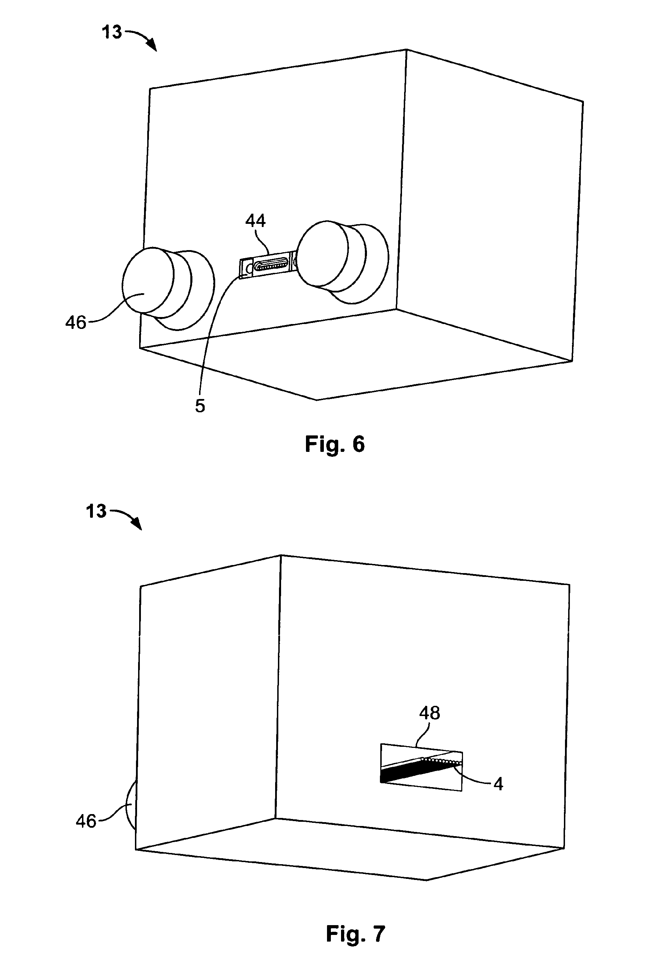

Figs. 6 and 7 illustrate an optical interconnector 13 according to an embodiment of the present invention.

As mentioned above, the optical interconnector 13 comprises a longitudinal cavity 15 for receiving an optical fiber ferrule 5. The cavity 15 has a frontal opening 44 at the side of the optical interconnector 13 that faces the backplane connector 9 when mated.

One or more female protrusions 46 may be provided on this side of the optical interconnector 13 for fitting into the male recesses 42 provided on the backplane connector 9 so as to roughly align the two connectors and fixing them together in a removable manner.

The longitudinal cavity 15 has a rear opening 48 on the opposite side for receiving the optical ferrule 5, which can be easily unplugged when removing the daughter card 2. The upper side of the optical interconnector 13 may be provided with additional attaching elements for fixing the optical interconnector 13 to the daughter card 2 (not shown).

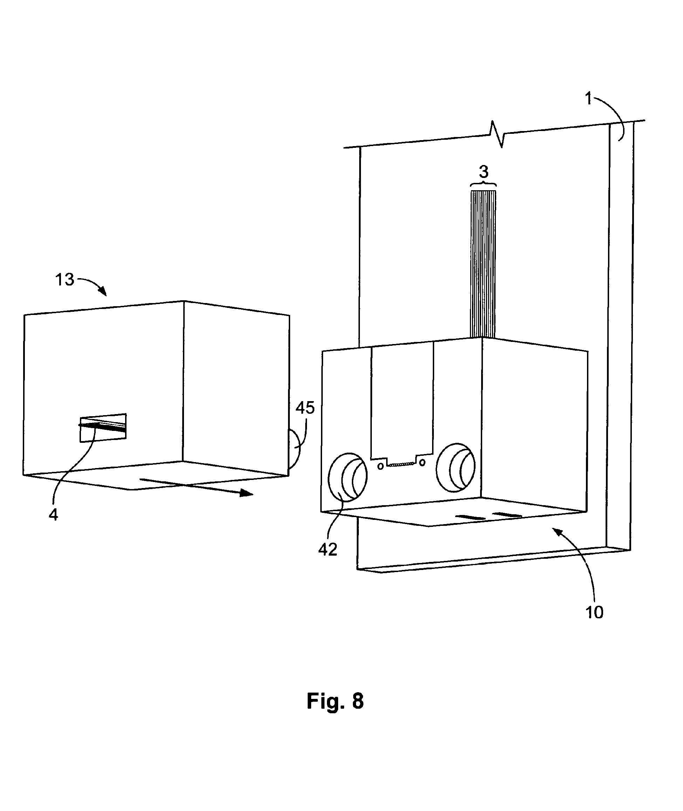

Fig. 8 is a perspective view of an optical interconnecting system of the invention during the process of coupling the optical interconnector 13 to the optical backplane 1. For the sake of simplicity, the daughter card 2 is not shown in Fig. 8.

The optical backplane 1 is provided with a backplane connector 9 arranged on it, and on which a plurality of backplane waveguides 3 is already fixed for aligning their coupling end faces 7 towards the optical interconnector 13. In order to optically couple the waveguides 4 inserted in the optical interconnector 13, the optical interconnector 13 is simply approached and mated with the backplane connector 9. If it is necessary to remove or substitute the daughter card 2, the daughter card 2 can be easily decoupled from the optical backplane 1 by simply pushing the daughter card 2 and unplugging the optical interconnector 13 from the backplane connector 9.

As shown in Fig. 1, the daughter card 2 may be provided with a recess 50 at the edge facing the optical backplane 1 and over the region where the backplane waveguides 3 are arranged in order to avoid physical contact with these waveguides.

Although in the embodiment illustrated in Fig. 1, the optical interconnector 13 is mounted on the daughter card 2 in such a manner that when mated to the backplane connector 9, the daughter card 2 is located at the side from which the backplane waveguides 3 emerge from the backplane connector 9 along the optical backplane 1, an alternative configuration may be envisaged in which the optical interconnector 13 is arranged on the daughter card 2 such that the daughter card 2 can be mounted on the side of the backplane connector 9 that is opposite to the emerging backplane waveguides. In this case, the edge of the daughter card 2 facing the optical backplane 1 does not have to be provided with recesses 50 without the danger of intersecting the backplane waveguide 3.

Although some examples of embodiments of the present invention where described above using terms such as "back", "rear", "front", "top", "bottom", etc., these terms were used with reference to the layout of the examples shown in the figures. These terms should be interpreted as relating to relative positions of the described components as shown in the Figures and therefore, are not to be construed as limiting the invention.

### List of reference signs

- Reference sign: Description
- 1: Optical backplane
- 2: Daughter card
- 3: Backplane waveguide
- 4: Daughter card waveguide
- 5: Optical ferrule
- 6: end portion of the backplane waveguide
- 7: end face of the backplane waveguide
- 8: end face of the daughter card waveguide
- 9: Optical backplane connector
- 10: Housing of backplane connector
- 11: 1^{St} aperture of backplane connector
- 12: 2^{nd} aperture of backplane connector
- 13: Optical interconnector
- 14: Housing of optical interconnector
- 15: Longitudinal cavity
- 16: Imaging lens
- β: orientation angle of daughter card
- α: Bend angle of backplane waveguide
- R: Bend radius of backplane waveguide
- C: Optical coupling region
- I: Image point
- 17: first assembly part, main part
- 18: second assembly part, mating part
- 19: Front side
- 20: Top side
- 21: Bottom side
- 22: Rear side
- 23: Adjacent walls
- 24: Niche
- 25: Lateral walls of niche
- 26: Back wall of niche
- 27: Intermediate curved region
- 28: Bottom wall of niche
- 29: Groove of main part
- 30: Rear wall, rear wall of second assembly part
- 32: Grooves of mating part
- 34: depressions
- 36: elevations
- 38: Female guide
- 40: Male guide
- 42: Recesses, male fixing element
- 44: Frontal opening
- 46: Female fixing element
- 48: Rear opening
- 50: Recess of daughter card

## Claims

1. An optical backplane connector comprising:
a housing having a first and second apertures linked by an inner hollow path for accommodating an end portion of a waveguide;
wherein the first aperture is positioned with respect to the second aperture so that the optical transmission axes through the first and second apertures, respectively, are aligned in different directions.

2. The optical backplane connector of claim 1, wherein
the optical transmission axis through the first aperture is aligned at a right-angle with respect to the optical transmission axis through the second aperture.

3. The optical backplane connector of claim 1 or claim 2, wherein
the inner hollow path is a through-hole adapted to fix the end portion of the waveguide between the first and second apertures.

4. The optical backplane connector of claim 3, wherein
the through-hole has a curved region with a radius of curvature that is selected based on a desired bend radius for the waveguide.

5. The optical backplane connector of any one of the preceding claims wherein, the housing is formed of first and second assembly parts,
wherein the inner hollow path and the first and second apertures are defined by corresponding recessions provided on opposing faces of the first and second assembly parts.

6. The optical backplane connector of claim 5, wherein the first assembly part comprises:
a niche opening to a front side of the housing and adapted to fit to the second assembly part, and
a guiding means adapted to guide the second assembly part into a fitting position in the niche.

7. The optical backplane connector of claim 6, wherein:
the niche has a back wall with a concave shape that substantially follows the curvature of the inner hollow path, and
the second assembly part has a rear face with a concave shape adapted to adjust to the back wall of the niche.

8. The optical backplane connector of claim 7, wherein the back wall of the niche and the rear face of the second assembly part are each provided with a half rounded groove that extends respectively from a top side of the housing to the front side of the housing, the half rounded grooves defining the inner hollow path between the first and second apertures when the housing is assembled.

9. The optical backplane connector of any one of the preceding claims, wherein the waveguide is a graded-index polymer optical fiber.

10. The optical backplane connector of claim 9, wherein the end face of the optical fiber is substantially on the plane of the first aperture and is shaped using a hot melt process.

11. The optical backplane connector according to one of the claims 1 to 8, wherein the waveguide is a glass optical fiber.

12. The optical backplane connector of claim 11, wherein the end face of the optical fiber is substantially on the plane of the first aperture and is shaped using a laser shaping process.

13. The optical backplane connector of any one of the preceding claims, wherein the first aperture is adapted to fix an end-face of the waveguide to be optically coupled to an external optical element.

14. An optical interconnector comprising:
a housing adapted to be mated to an optical backplane connector according to any one of the preceding claims and having a longitudinal cavity adapted to accommodate an end part of a second waveguide;
wherein the longitudinal cavity has a frontal opening provided on a side of the housing facing the optical backplane connector and which is aligned with the first aperture of the backplane connector when mated.

15. The optical interconnector of claim 14, wherein the longitudinal cavity is further adapted to accommodate an optical interface means provided between said end part of the second waveguide and the frontal opening for focusing a diverging optical beam emanating from the second waveguide onto a receiving optical element at the frontal opening.

16. The optical interconnector of claim 15, wherein said optical interface means comprises an imaging lens adapted to converge the diverging optical beam and to produce a converging optical beam with a pre-determined beam diameter at the receiving optical element.

17. The optical interconnector of claim 15 or claim 16, wherein
said longitudinal cavity is adapted to receive an optical fiber connector comprising said end part of the second waveguide and said optical interface means.

18. An optical backplane interconnection system, comprising:
a backplane adapted to accommodate a waveguide for transmitting optical signals along a direction substantially parallel to the backplane;
an optical backplane connector according to any one of claims 1 to 13 mounted on the backplane and oriented so as to receive the waveguide through the second aperture and to fix an end face of the waveguide at the first aperture ; and
an optical interconnector according to any one of claims 14 to 17, wherein the optical interconnector is adapted to be mounted to a circuit board.

19. A method of optically coupling an optical backplane to an out-of-plane circuit board, comprising:
providing a first waveguide substantially parallel to the optical backplane and deflecting the direction of an optical transmission axis of the first waveguide by bending an end part of the second waveguide;
providing a second waveguide substantially parallel to the out-of-plane circuit board;
focusing an optical beam emanating from the second waveguide onto an end face of the first waveguide, wherein the optical beam is converged to a pre-determined beam diameter at the end face.
